# EUROPÄISCHE PATENTSCHRIFT

(11) **EP 4 087 745 B1**
(45) Veröffentlichungstag und Bekanntmachung des Hinweises auf die Patenterteilung: **18.09.2024**
(21) Anmeldenummer: 20830102.8
(22) Anmeldetag: 11.12.2020
(51) Int. Cl.: B60H 1/34, F24F 13/06, F24F 13/15

(54) **LUFTDÜSE MIT IN EINEN AUFNAHMERAUM EINER LAMELLE EINGESETZTEM FEDERELEMENT**
AIR NOZZLE WITH SPRING ELEMENT INSERTED INTO A RECEIVING SPACE OF A LAMELLA
BUSE D'AIR DOTÉE D'ÉLÉMENT RESSORT INSÉRÉ DANS UN ESPACE DE RÉCEPTION D'UNE LAMELLE

(30) Priorität: 09.01.2020 DE 102020100322
(43) Veröffentlichungstag der Anmeldung: 16.11.2022
(73) Patentinhaber: Dr. Schneider Kunststoffwerke GmbH, 96317 Kronach (DE)
(72) Erfinder: DERX, Jenny, 96346 Wallenfels (DE)
(74) Vertreter: Isarpatent
(86) Internationale Anmeldenummer: PCT/EP2020/085700
(87) Internationale Veröffentlichungsnummer: WO 2021/139961

(56) Entgegenhaltungen:
- JP-U- S60 144 039
- KR-A- 20080 036 883
- US-A1- 2006 040 606
- US-A1- 2019 366 808

## Beschreibung

Die Erfindung betrifft eine Luftdüse mit einer Lamelle, die über zwei an gegenüberliegenden Stirnflächen der Lamelle angeordnete Lagerzapfen in zwei gegenüberliegenden Wänden der Luftdüse um eine Drehachse verschwenkbar gelagert ist.

Aus der DE 20 2011 050 819 U1 ist eine Einrichtung zur Beeinflussung der Schwenkbewegung von Lamellen, die in einem Luftdurchströmgehäuse gelagert sind, bekannt. Mindestens eine der Lamellen ist mit einem Magnetelement ausgestattet, das über ein an der dem Magnetelement zugewandten Gehäuse- oder Rahmenwand angebrachtes, aus magnetisierbarem Material bestehendes Flächenelement beim Verschwenken der Lamelle gleitet.

Die DE 20 2010 008 838 U1 offenbart eine Einrichtung zur Dämpfung der Bewegung eines Bedienelements, welche ein stationäres Element und ein gegenüber dem stationären Element bewegliches Element aufweist. Beide vorgenannten Elemente haben einen magnetisch wirksamen Teilbereich. Zwischen diesen magnetisch wirksamen Teilbereichen ist zumindest partiell eine Beschichtung angeordnet.

Die DE 20 2008 008 882 U1 offenbart ein Lager für eine in einem Gehäuse einer Luftdüse verschwenkbar gelagerte Lamelle, welche eine Schwenkachse bildende Lagerzapfen aufweist, die in seitlichen Wänden eines am Gehäuse befestigten Rahmens gelagert sind. Dabei ist mindestens ein Lagerzapfen stirnseitig in dem Lager federnd abgestützt, wobei die Federanordnung mit einer Reibfläche an der Stirnseite des Lagerzapfens bewegungsdämpfend anliegt.

In der DE 203 09 732 U1 ist eine Lüftungsdüse für ein Kraftfahrzeug beschrieben, welche ein Gehäuse und eine mittels eines Lamellenvorhangs verschließbare Ausströmöffnung aufweist. Die Lamellen sind jeweils endseitig in den Wänden des Gehäuses oder daran angeschlossener Teile drehbar gelagert. Jedes Drehlager ist zumindest teilweise aus einem Elastomer gebildet.

Die DE 201 18 274 U1 offenbart eine Luftdüse für den Auslass eines Luftstroms aus einem Luftzuführschacht, in welcher um Gelenkachsen verschwenkbar im Gehäuse gelagerte Lamellen vorgesehen sind. Des Weiteren ist ein streifenförmiger Mitnehmer vorgesehen, wobei zur Bildung eines Reibmoments an zumindest einer Verbindung zwischen einer Lamelle und dem Mitnehmer ein Reibungsgehemme vorgesehen ist, das auf den Lagerzapfen oder auf den Mitnehmer wirkt.

Die DE 90 11 803 U1 offenbart eine Klappe, insbesondere für eine Belüftungs- oder Klimaanlage von Kraftfahrzeugen, welche zwischen zwei Kanalwänden in beidendig der Klappe gelegenen Lagerstellen um eine zwischen den Lagerstellen verlaufende Achse schwenkbeweglich aufgenommen ist. Die Lagerstellen bestehen aus wandseitig vorgesehenen zapfenartigen Lagerelementen und diese aufnehmende büchsenartige Gegenlagerelementen. Mindestens ein Lagerelement ist gegenüber dem zugehörigen Gegenlagerelement federnd gelagert, wobei zwischen dem Lagerelement und dem Gegenlagerelement eine Verdrehbarkeit aufrechterhalten ist.

Aus der EP 3 388 265 B1 ist ein Luftausströmer mit einem Reibelement und einer Lamelle, die in einem Luftkanal über Lagerzapfen verschwenkbar in einem Gehäuse gelagert ist, bekannt. Mindestens ein Lagerzapfen weist einen Reibkörper auf. Das Reibelement ist derart im Gehäuse des Luftausströmers angeordnet, dass eine Reibfläche des Reibkörpers an einer Oberfläche des Reibelements anliegt.

Im Stand der Technik sind weitere Luftdüsen mit einer Lamelle bekannt, wobei die Lamelle jeweils über zwei an gegenüberliegenden Stirnflächen der Lamelle angeordneten Lagerzapfen in zwei gegenüberliegenden Wänden der Luftdüse um eine Drehachse verschwenkbar gelagert ist.

In der US 2006/040606 A1 ist einer der Lagerzapfen durch eine elastische Sicherung gegenüber einer Wand der Luftdüse federnd beaufschlagt.

Die Lamelle der US 2019/366808 A1 weist einen weiteren, exzentrisch zur Drehachse angeordneten Zapfen auf, der als Reibkörper ausgeführt in einem Schlitz beweglich angeordnet ist.

Die Lamelle der KR 2008 0036883 A weist ebenfalls einen weiteren Zapfen auf, der in einem Schlitz beweglich gelagert ist, welcher die Reibkraft zum Schlitz hin mit einem Federelement erzeugt.

In der JP S60 144039 U weist ein Lagerzapfen einen Arm mit einer Fläche auf, welche einen Reibkontakt mit einer Reibfläche einer außerhalb der Wand der Luftdüse positionierten Platte bildet.

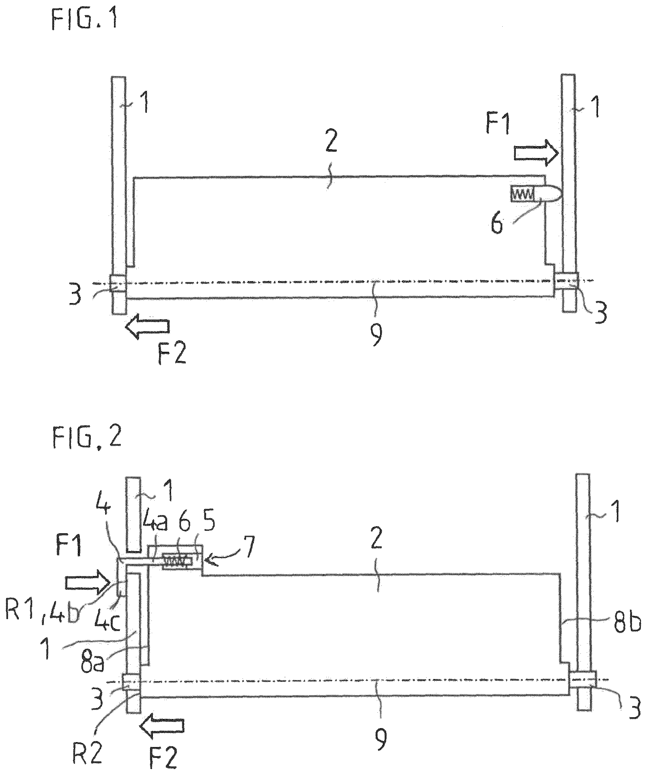

Des Weiteren sind bereits Luftdüsen bekannt, die mit Federelementen versehene Lamellen aufweisen. Wie in der Figur 1 dargestellt ist, sind derartige Lamellen 2 über zwei an gegenüberliegenden Stirnflächen der Lamelle angeordnete Lagerzapfen 3 in einer Blende 1 der Luftdüse um eine Drehachse 9 verschwenkbar gelagert. Die Federelemente 6 üben eine Kraft F1 auf die Innenseite einer Seitenwand der Blende 1 aus. Durch diese Kraft F1 wird die Lamelle 2 an die gegenüberliegende Seitenwand der Blende 1 gedrückt und übt dort eine Kraft F2 aus. Ein derartiges System ist anfällig für Schwankungen innerhalb einer vorgegebenen Toleranz, da größere Dimensionen in eine größere Allgemeintoleranz fallen (siehe beispielsweise die Norm ISO 2768-1). Zudem führen große Dimensionen zu einer großen Längenausdehnung, was im Zusammenspiel mit verschiedenen Materialien zu unterschiedlichen Längenausdehnungen führt. Dadurch verändern sich die Bedingungen für eine funktionierende und konstante Bedienkraft, was stark schwankenden Bedienkomfort hervorruft, der sich in einem Verhaken, Verklemmen, Klappern und großem Spiel des Systems zeigt.

Die Aufgabe der Erfindung besteht darin, eine Luftdüse anzugeben, bei welcher die Toleranzen der Bedienkraft zum Verstellen einer Lamelle klein und weitestgehend konstant sind.

Diese Aufgabe wird durch eine Luftdüse mit den im Anspruch 1 angegebenen Merkmalen gelöst. Vorteilhafte Ausgestaltungen und Weiterbildungen der Erfindung sind in den abhängigen Ansprüchen angegeben.

Eine erfindungsgemäße Luftdüse weist eine Lamelle auf, die über zwei an gegenüberliegenden Stirnflächen der Lamelle angeordnete Lagerzapfen in zwei gegenüberliegenden Wänden der Luftdüse um eine Drehachse verschwenkbar gelagert ist, wobei im Bereich der ersten Stirnfläche der Lamelle ein in die Lamelle integrierter Aufnahmeraum eingebracht ist, in den Aufnahmeraum ein Führungsstift eines Schiebeelements eingesetzt ist, der Führungsstift und der Aufnahmeraum eine Schiebeführung bilden, der Führungsstift innerhalb des Aufnahmeraums parallel zur Drehachse verschiebbar ist, das Schiebeelement innerhalb des Aufnahmeraums mit einer von einem Federelement ausgeübten Federkraft beaufschlagt ist und das Schiebeelement in seinem außerhalb der Lamelle positionierten Bereich mindestens eine Reibfläche aufweist, welche der ersten Stirnfläche der Lamelle zugewandt ist und bei einem Verschwenken der Lamelle durch die von dem Federelement ausgeübte Federkraft einen ersten Reibkontakt mit der Außenseite einer Wand der Luftdüse bildet.

Gemäß einer Ausführungsform der Erfindung wird die Federkraft von einer Druckfeder erzeugt.

Gemäß einer Ausführungsform der Erfindung besteht die Druckfeder aus Kunststoff oder aus Metall.

Gemäß einer Ausführungsform der Erfindung ist die Druckfeder als separates Bauteil ausgeführt.

Gemäß einer Ausführungsform der Erfindung ist auf den Führungsstift innerhalb des Aufnahmeraums eine Verschlusskappe aufgesetzt.

Gemäß einer Ausführungsform der Erfindung ist die Druckfeder an das Schiebeelement angeformt.

Gemäß einer Ausführungsform der Erfindung ist die Druckfeder an die Lamelle angeformt.

Gemäß einer Ausführungsform der Erfindung handelt es sich bei dem Federelement um eine federnde Lasche.

Gemäß einer Ausführungsform der Erfindung ist der Führungsstift verdrehsicher ausgeführt.

Gemäß einer Ausführungsform der Erfindung ist die mindestens eine Reibfläche an mindestens einem Arm des Schiebeelements vorgesehen, der in einem Winkel zum Führungsstift verläuft, der im Bereich zwischen 70° und 110° liegt, vorzugsweise bei 90°.

Gemäß einer Ausführungsform der Erfindung ist der in die Lamelle integrierte Aufnahmeraum von der Drehachse beabstandet.

Gemäß einer Ausführungsform der Erfindung besteht bei einem Verschwenken der Lamelle im Bereich der Drehachse ein zweiter Reibkontakt, der zwischen einer Innenwand der Luftdüse und der ersten Stirnseite der Lamelle oder einem Absatz an der ersten Stirnseite der Lamelle gebildet ist.

Gemäß einer Ausführungsform der Erfindung erfolgt die Lagerung der Lamelle in einem Gehäuse oder einer Blende oder einem Rahmen der Luftdüse.

Eine erfindungsgemäße Luftdüse hat den Vorteil, dass sich die gesamte Bedienkrafterzeugung auf ein und derselben Seite der Lamelle befindet. Dies hat zur Folge, dass Toleranzen und Längenveränderungen der Lamelle unabhängig von der Länge der Lamelle irrelevant für die Erzeugung der Bedienkraft sind. Dadurch wird ein konstanter Bedienkomfort sichergestellt.

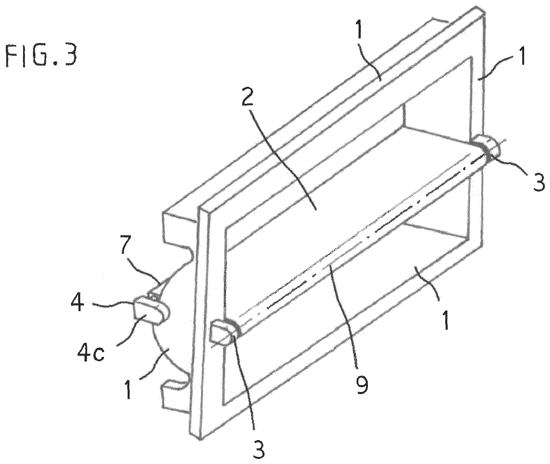

Weitere vorteilhafte Eigenschaften der Erfindung ergeben sich aus deren beispielhafter Erläuterung anhand der Figuren 2 und 3.

### Figurenbeschreibung

Figur 1 zeigt eine Skizze eines im Stand der Technik vorhandenen Aufbaus einer federunterstützen Bedienkrafterzeugung an einer Lamelle einer Luftdüse.
Figur 2 zeigt eine Skizze zur Veranschaulichung eines Ausführungsbeispiels für eine erfindungsgemäße Luftdüse.
Figur 3 zeigt eine perspektivische Skizze eines Ausführungsbeispiels für eine erfindungsgemäße Luftdüse.

Die dargestellte Luftdüse weist eine Blende 1 auf, von welcher in der Figur 2 die beiden Seitenwände gezeigt sind. Des Weiteren weist die Luftdüse eine Lamelle 2 auf. Diese ist über zwei an gegenüberliegenden Stirnflächen 8a, 8b der Lamelle 2 angeordnete Lagerzapfen 3 in der Blende 1 um eine Drehachse 9 verschwenkbar gelagert. Im Bereich der linksseitigen Stirnfläche 8a der Lamelle ist ein in die Lamelle integrierter Aufnahmeraum 7 eingebracht. In diesen Aufnahmeraum 7 ist ein Führungsstift 4a eines Schiebeelements 4 eingesetzt. Der Führungsstift 4a und der Aufnahmeraum 7 bilden eine Schiebeführung. Der Führungsstift 4a ist innerhalb des Aufnahmeraums 7 parallel zur Drehachse 9 verschiebbar. Das Schiebeelement 4 ist innerhalb des Aufnahmeraums 7 von einer von einem Federelement 6 ausgeübten Federkraft beaufschlagt.

Bei dem Federelement 6 handelt es sich bei dem in der Figur 2 gezeigten Ausführungsbeispiel um eine Druckfeder. Diese Druckfeder besteht aus Kunststoff oder aus Metall.

Die Druckfeder kann als separates Bauteil ausgeführt sein. In diesem Falle ist auf den Führungsstift 4a innerhalb des Aufnahmeraumes 7 eine Verschlusskappe 5 aufgesetzt. Alternativ dazu kann die Druckfeder 6 an das Schiebeelement 4 oder an die Lamelle 2 angeformt sein.

Eine alternative, nicht in der Figur 2 dargestellte Ausführungsform besteht darin, das Federelement 6 als federnde Lasche auszuführen.

Wie aus der Figur 2 ersichtlich ist, ist das Schiebeelement 4 durch die linksseitige Seitenwand der Blende 1 hindurchgeführt und weist in seinem außerhalb der Lamelle und außerhalb der linksseitigen Seitenwand der Blende 1 positionierten Bereich eine Reibfläche 4b auf. Diese Reibfläche 4b ist der ersten Stirnfläche 8a der Lamelle zugewandt und bildet bei einem Verschwenken der Lamelle 2 durch die von der Druckfeder 6 ausgeübte Federkraft einen ersten Reibkontakt R1 mit der Außenseite der linksseitigen Seitenwand der Blende 1.

Des Weiteren ist aus der Figur 2 ersichtlich, dass die Reibfläche 4b an einem Arm 4c des Schiebeelements 4 vorgesehen ist, der in einem Winkel zum Führungsstift 4a verläuft, der beim gezeigten Ausführungsbeispiel bei 90° liegt. Alternativ dazu kann der Winkel zwischen dem Arm 4c des Schiebeelements und dem Führungsstift 4a auch größer oder kleiner als 90° sein. Vorzugsweise liegt dieser Winkel in einem Bereich zwischen 70° und 110°.

Bei dem in der Figur 2 gezeigten Ausführungsbeispiel ist eine Reibfläche 4b an einem Arm des Schiebeelements 4 vorgesehen. Alternativ dazu können an dem genannten Arm auch mehrere Reibflächen vorgesehen sein oder es können mehrere Arme vorgesehen sein, an denen sich jeweils eine Reibfläche befindet.

Des Weiteren ist aus der Figur 2 ersichtlich, dass bei einem Verschwenken der Lamelle im Bereich der Drehachse 9 ein zweiter Reibkontakt R2 besteht, der zwischen der Innenseite der linken Seitenwand der Blende 1 und der linken Stirnseite 8a der Lamelle 2 gebildet ist.

Der Führungsstift 4a des Schiebeelements 4 ist vorzugsweise verdrehsicher ausgeführt. Beispielsweise ist der Führungsstift 4a eckig oder polygonartig ausgestaltet oder er weist Abflachungen auf.

Ferner ist aus der Figur 2 ersichtlich, dass der in die Lamelle 2 integrierte Aufnahmeraum 7 von der Drehachse 9 beabstandet ist. Beim gezeigten Ausführungsbeispiel ist der Aufnahmeraum 7 in dem von der Drehachse 9 abgewandten Endbereich der Lamelle 2 vorgesehen.

Die Figur 3 zeigt eine perspektivische Skizze einer erfindungsgemäßen Luftdüse. Aus dieser Darstellung ist insbesondere ersichtlich, dass innerhalb der Blende 1 der Luftdüse eine Lamelle 2 gelagert ist, wobei diese Lamelle 2 über zwei an gegenüberliegenden Stirnflächen der Lamelle angeordnete Lagerzapfen 3 in der Blende 1 um eine Drehachse 9 verschwenkbar gelagert ist. Des Weiteren geht aus der Figur 3 hervor, dass im Bereich der dem Betrachter zugewandten seitlichen Stirnfläche der Lamelle ein in die Lamelle 2 integrierter Aufnahmeraum 7 eingebracht ist, in welchen ein Schiebeelement 4 eingesetzt ist. Dieses Schiebeelement 4 weist in seinem außerhalb der Lamelle positionierten Bereich einen Arm 4c auf, dessen Innenseite bei einem Verschwenken der Lamelle 2 einen Reibkontakt mit der Außenseite der dem Betrachter zugewandten Seitenwand der Blende 1 bildet.

Anstelle der Blende 1 kann die Lamelle 2 auch in einem anderen Bauteil der Luftdüse verschwenkbar gelagert sein, bspw. einem Gehäuse oder einem Rahmen. Zudem kann alternativ an der Luftdüse eine Rippe oder ein Wandabschnitt angeformt sein, an der bzw. an dem sich der Reibkontakt über den Arm 4c des Schiebeelements 4 bildet.

Bei einer Luftdüse, die die erfindungsgemäßen Merkmale aufweist, befindet sich die gesamte Bedienkrafterzeugung auf ein und derselben Seite der Lamelle. Dies hat zur Folge, dass Toleranzen und Längenveränderungen der Lamelle unabhängig von der Länge der Lamelle irrelevant für die Erzeugung der Bedienkraft sind. Dadurch wird ein konstanter Bedienkomfort sichergestellt.

Die oben beschriebenen, an nur einer Seite der Luftdüse wirksamen Reibkontakte bzw. Reibkräfte wirken einem ungewollten selbständigen Verstellen der Lamelle entgegen und gewährleisten des Weiteren, dass zu einem Verschwenken der Lamelle eine im Wesentlichen konstante, allenfalls geringen Toleranzen unterliegende Bedienkraft notwendig ist.

### Bezugszeichenliste

- 1: Blende
- 2: Lamelle
- 3: Lagerzapfen
- 4: Schiebeelement
- 4a: Führungsstift
- 4b: Reibfläche
- 4c: Arm des Schiebeelements
- 5: Verschlusskappe
- 6: Druckfeder
- 7: Aufnahmeraum
- 8a: Stirnfläche der Lamelle
- 8b: Stirnfläche der Lamelle
- 9: Drehachse
- R1: Reibkontakt
- R2: Reibkontakt

## Patentansprüche

1. Luftdüse mit einer Lamelle (2), die über zwei an gegenüberliegenden Stirnflächen (8a, 8b) der Lamelle (2) angeordnete Lagerzapfen (3) in zwei gegenüberliegenden Wänden der Luftdüse um eine Drehachse (9) verschwenkbar gelagert ist, wobei
- im Bereich einer ersten Stirnfläche (8a) der Lamelle (2) ein in die Lamelle (2) integrierter Aufnahmeraum (7) eingebracht ist,
- in den Aufnahmeraum (7) ein Führungsstift (4a) eines Schiebeelements (4) eingesetzt ist,
- der Führungsstift (4a) und der Aufnahmeraum (7) eine Schiebeführung bilden,
- der Führungsstift (4a) innerhalb des Aufnahmeraums (7) parallel zur Drehachse (9) verschiebbar ist und
- das Schiebeelement (4) innerhalb des Aufnahmeraums (7) mit einer von einem Federelement (6) ausgeübten Federkraft beaufschlagt ist, **dadurch gekennzeichnet, dass**
- das Schiebeelement (4) in seinem außerhalb der Lamelle (2) positionierten Bereich mindestens eine Reibfläche (4b) aufweist, welche der ersten Stirnfläche (8a) der Lamelle (2) zugewandt ist und bei einem Verschwenken der Lamelle (2) durch die von dem Federelement (6) ausgeübte Federkraft einen ersten Reibkontakt (R1) mit der Außenseite einer Wand der Luftdüse bildet.

2. Luftdüse nach Anspruch 1, bei welcher die Federkraft von einer Druckfeder (6) erzeugt wird.

3. Luftdüse nach Anspruch 2, bei welcher die Druckfeder (6) aus Kunststoff oder aus Metall besteht.

4. Luftdüse nach Anspruch 2 oder 3, bei welcher die Druckfeder (6) als separates Bauteil ausgeführt ist.

5. Luftdüse nach Anspruch 4, bei welcher auf den Führungsstift (4a) innerhalb des Aufnahmeraums (7) eine Verschlusskappe (5) aufgesetzt ist.

6. Luftdüse nach einem der Ansprüche 2 - 3, bei welcher die Druckfeder (6) an das Schiebeelement (4) angeformt ist.

7. Luftdüse nach einem der Ansprüche 2 - 3, bei welcher die Druckfeder (6) an die Lamelle (2) angeformt ist.

8. Luftdüse nach Anspruch 1, bei welcher das Federelement (6) eine federnde Lasche ist.

9. Luftdüse nach einem der vorhergehenden Ansprüche, bei welcher der Führungsstift (4a) verdrehsicher ausgeführt ist.

10. Luftdüse nach einem der vorhergehenden Ansprüche, bei welcher die mindestens eine Reibfläche (4b) an mindestens einem Arm des Schiebeelements (4) vorgesehen ist, der in einem Winkel zum Führungsstift (4a) verläuft, der im Bereich zwischen 70° und 110° liegt.

11. Luftdüse nach einem der vorhergehenden Ansprüche, bei welcher der in die Lamelle (2) integrierte Aufnahmeraum (7) von der Drehachse (9) beabstandet ist.

12. Luftdüse nach einem der vorhergehenden Ansprüche, bei welcher bei einem Verschwenken der Lamelle (2) im Bereich der Drehachse (9) ein zweiter Reibkontakt (R2) besteht, der zwischen einer Innenwand der Luftdüse und der ersten Stirnseite (8a) der Lamelle (2) gebildet ist.

13. Luftdüse nach einem der vorhergehenden Ansprüche, bei welcher die Lamelle (2) in zwei gegenüberliegenden Wänden eines Gehäuses oder einer Blende (1) oder eines Rahmens der Luftdüse verschwenkbar gelagert ist.

## Claims

1. An air nozzle with a lamella (2), which is mounted in hinged fashion about an axis of rotation (9) in two opposite walls of the air nozzle by bearing two pins arranged on opposite endplates (8a, 8b) of the lamella (2), wherein
- a receiving space (7) integrated into the lamella (2) in the area of a first endplate (8a) of the lamella (2) is introduced,
- in the receiving space (7) a guide pin (4a) of a sliding element (4) is inserted,
- the guide pin (4a) and the receiving space (7) form a sliding guide,
- the guide pin (4a) within the receiving space (7) is slidable parallel to the axis of rotation (9) and
- the sliding element (4) within the receiving space (7) is acted upon with a spring action activated by a spring element (6),
**characterized in that**
- the sliding element (4) has at least one friction surface (4b) in its area positioned outside of the lamella (2), which faces the first endplate (8a) of the lamella (2) and with the angling of the lamella (2) by the spring action activated by the spring element (6) forms a first friction contact (R1) with the outside of a wall of the air nozzle.

2. An air nozzle according to claim 1 wherein the spring action is caused by a pressure spring (6).

3. An air nozzle according to claim 2, wherein the pressure spring (6) is composed of plastic or metal.

4. An air nozzle according claim 2 or 3, wherein the pressure spring (6) is executed as a separate component.

5. An air nozzle according to claim 4, wherein an end cap (5) is set on the guide pin (4a) within the receiving space (7).

6. An air nozzle according to one of the claims 2 - 3, wherein the pressure spring (6) is molded on the sliding element (4).

7. An air nozzle according to one of the claims 2 - 3, wherein the pressure spring (6) is molded on the lamella (2).

8. An air nozzle according to claim 1, wherein the spring element(6) is a spring tab.

9. An air nozzle according to one of the foregoing claims, wherein the guide pin (4a) is executed to be rotatable.

10. An air nozzle according to one of the foregoing claims, wherein a friction surface (4b) of which there is at least one is provided on an arm of the sliding element (4) of which there is at least one, which travels in an angle to the guide pin (4a), which lies in the range between 70° and 110°.

11. An air nozzle according to one of the foregoing claims, wherein the receiving space (7) integrated into the lamella (2) is spaced from the axis of rotation (9).

12. Air nozzle according to one of the foregoing claims, wherein with the angling of the lamella (2)in the area of the axis of rotation (9) there is a second friction contact (R2), which is formed between an inner wall of the air nozzle and the first endplate (8a) of the lamella (2).

13. Air nozzle according to one of the foregoing claims, wherein the lamella (2) is mounted in hinge fashion in two opposite walls of a housing or a face plate (1) or a framework of the air nozzle.

## Revendications

1. Buse d'air avec une lamelle (2) qui est montée de manière à pouvoir pivoter autour d'un axe de rotation (9) par le biais de deux tourillons (3) disposés sur des surfaces frontales (8a, 8b) opposées de la lamelle (2) dans deux parois opposées de la buse d'air, sachant que
- dans la zone d'une première surface frontale (8a) de la lamelle (2) est aménagé un espace de réception (7) intégré dans la lamelle (2),
- dans l'espace de réception (7) est insérée une tige de guidage (4a) d'un élément coulissant (4),
- la tige de guidage (4a) et l'espace de réception (7) forment un moyen de guidage à coulisse,
- la tige de guidage (4a) peut être déplacée à l'intérieur de l'espace de réception (7) parallèlement à l'axe de rotation (9), et
- l'élément coulissant (4) est sollicité, à l'intérieur de l'espace de réception (7), par une force élastique exercée par un élément ressort (6), **caractérisé en ce que**
- l'élément coulissant (4) présente dans sa zone positionnée à l'extérieur de la lamelle (2) au moins une surface de frottement (4b), laquelle est tournée vers la première surface frontale (8a) de la lamelle (2) et forme, lors d'un pivotement de la lamelle (2) en raison de la force élastique exercée par l'élément ressort (6) un premier contact de frottement (R1) avec le côté extérieur d'une paroi de la buse d'air.

2. Buse d'air selon la revendication 1, dans laquelle la force élastique est générée par un ressort de compression (6).

3. Buse d'air selon la revendication 2, dans laquelle le ressort de compression (6) est en matière plastique ou en métal.

4. Buse d'air selon la revendication 2 ou 3, dans laquelle le ressort de compression est conçu en tant qu'élément séparé.

5. Buse d'air selon la revendication 4, dans laquelle un bouchon (5) est placé sur la tige de guidage (4a) à l'intérieur de l'espace de réception (7).

6. Buse d'air selon la revendication 2 ou 3, dans laquelle le ressort de compression (6) est formé sur l'élément coulissant (4).

7. Buse d'air selon la revendication 2 ou 3, dans laquelle le ressort de compression (6) est formé sur la lamelle (2).

8. Buse d'air selon la revendication 1, dans laquelle l'élément ressort (6) est une patte élastique.

9. Buse d'air selon l'une des revendications précédentes, dans laquelle la tige de guidage (4a) est réalisée de manière à résister à la torsion.

10. Buse d'air selon l'une des revendications précédentes, dans laquelle au moins une surface de frottement (4b) est prévue sur au moins un bras de l'élément coulissant (4) qui s'étend selon un angle par rapport à la tige de guidage (4a) qui est compris entre 70° et 110°.

11. Buse d'air selon l'une des revendications précédentes, dans laquelle l'espace de réception (7) intégré dans la lamelle (2) est espacé de l'axe de rotation (9).

12. Buse d'air selon l'une des revendications précédentes, dans laquelle, lors d'un pivotement de la lamelle (2) dans la zone de l'axe de rotation (9), il existe un deuxième contact de frottement (R2) qui se produit entre une paroi intérieure de la buse d'air et la première face frontale (8a) de la lamelle (2).

13. Buse d'air selon l'une des revendications précédentes, dans laquelle la lamelle (2) est montée de manière à pouvoir pivotée dans deux parois opposées d'un boîtier ou d'un obturateur (1) ou d'un cadre de la buse d'air.
